# EUROPEAN PATENT APPLICATION

(11) **EP 4 800 378 A1**
(43) Date of publication of application: **02.09.2026**
(21) Application number: 26161751.8
(22) Date of filing: 02.03.2026
(51) Int. Cl.: G01N 21/65

(54) **SYSTEMS AND METHODS FOR PERFLUOROALKYL AND POLYFLUOROALKYL SUBSTANCES DETECTION**

(30) Priority: 28.02.2025 US 202519066218
(71) Applicant: Services Pétroliers Schlumberger, 75007 Paris (FR); Schlumberger Technology B.V., 2514 JG The Hague (NL)
(72) Inventor: ZOLFAGHARI, Alireza, Texas, 77583 (US); YUN, Jushik, Texas, 77583 (US)
(74) Representative: Schlumberger Intellectual Property Department

(57) **Abstract**

A method including preparing a surface of a substrate, wherein the surface of the substrate includes a carbonous material, controlling, via a control system, a LIG subsystem to generate a LIG modified area of the substrate, modifying, via an electrochemical subsystem, the LIG modified area of the substrate to generate a sensing area comprising one or more types of nanoparticles, and performing, via a SERS subsystem, detection of a spectral signature of one or more PFAS compounds on the sensing area.

## Description

### BACKGROUND

The present disclosure generally relates to systems and methods for detecting and quantifying perfluoroalkyl and polyfluoroalkyl substances (PFAS) using surface-enhanced Raman spectroscopy (SERS) on modified laser-induced graphene (LIG).

This section is intended to introduce the reader to various aspects of art that may be related to various aspects of the present disclosure, which are described and/or claimed below. This discussion is believed to be helpful in providing the reader with background information to facilitate a better understanding of the various aspects of the present disclosure. Accordingly, it may be understood that these statements are to be read in this light, and not as admissions of prior art.

PFAS include a group of synthetic organofluoride chemical compounds used in a multitude of consumer products. PFAS are long-lasting in the environment due to the persistence of carbon-fluorine bonds. A subset of PFAS compounds are considered as persistent organic pollutants. Presently, techniques are being produced to assess and address potential human and/or environmental concerns associated with such PFAS compounds. As such, detection of PFAS compounds in fluids may be used to monitor and/or quantify PFAS in various environments. Previously available PFAS detection techniques include multi-step methods that may involve various pretreatment steps. For example, fluids may be preconcentrated for spectroscopic analysis such as Raman spectroscopy. However, conventional Raman spectroscopy may not offer reliable and/or sensitive PFAS detection due to low PFAS concentrations in such fluids. As such, there is a need to improve efficiency and sensitivity of PFAS detection in liquids to provide streamlined detection of PFAS.

### SUMMARY

A summary of certain embodiments disclosed herein is set forth below. It should be understood that these aspects are presented merely to provide the reader with a brief summary of these certain embodiments and that these aspects are not intended to limit the scope of this disclosure. Indeed, this disclosure may encompass a variety of aspects that may not be set forth below.

In certain embodiments, a method including preparing a surface of a substrate, wherein the surface of the substrate includes a carbonous material, controlling, via a control system, a LIG subsystem to generate a LIG modified area of the substrate, modifying, via an electrochemical subsystem, the LIG modified area of the substrate to generate a sensing area comprising one or more types of nanoparticles, and performing, via a SERS subsystem, detection of a spectral signature of one or more PFAS compounds on the sensing area..

In certain embodiments, a perfluoroalkyl and polyfluoroalkyl substances (PFAS) detection system includes a PFAS detection platform including a sensing area, wherein the sensing surface includes a modified laser-induced graphene (LIG) surface including one or more types of nanoparticles and a surface enhanced Raman (SERS) subsystem including a SERS analyzer configured to detect a spectral signature of one or more PFAS compounds in a sample based on light interacting with the one or more PFAS compounds on a surface of the sensing area of the PFAS detection platform.

In certain embodiments, a PFAS detection system, including a PFAS detection platform including a sensing area, wherein the sensing area includes one or more areas of LIG and a plurality of nanoparticles, processing circuitry including one or more processors and memory storing instructions, that when executed by the processing circuitry, cause the processing circuitry to detect, via the PFAS detection platform, a spectral signature of one or more PFAS compounds, wherein detection of the spectral signature of the one or more PFAS compounds comprises excitation, via a SERS subsystem, of the sensing area of the PFAS detection platform to excite one or more vibrational modes of the PFAS compounds and wherein excitation of the one or more vibrational modes of the PFAS compounds is enhanced based on the one or more LIG areas and the nanoparticles of the sensing area of the PFAS detection platform.

Various refinements of the features noted above may exist in relation to various aspects of the present disclosure. Further features may also be incorporated in these various aspects as well. These refinements and additional features may exist individually or in any combination. For instance, various features discussed below in relation to one or more of the illustrated embodiments may be incorporated into any of the above-described aspects of the present disclosure alone or in any combination. The brief summary presented above is intended only to familiarize the reader with certain aspects and contexts of embodiments of the present disclosure without limitation to the claimed subject matter.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 is a block diagram of a PFAS detection system that may perform a process to form a PFAS detection platform, in accordance with an embodiment of the present disclosure;
FIG. 2 is a schematic diagram of a process to form the PFAS detection platform of FIG. 1, in accordance with an embodiment of the present disclosure;
FIG. 3 is a schematic diagram of a detecting PFAS using surface enhanced Raman spectroscopy (SERS), in accordance with aspects of the present disclosure; and
FIG. 4 is a flow diagram of an embodiment of a process for preparing a PFAS detection platform and detecting PFAS on the PFAS detection platform via SERS, in accordance with aspects of the present disclosure.

### DETAILED DESCRIPTION

Certain embodiments commensurate in scope with the present disclosure are summarized below. These embodiments are not intended to limit the scope of the disclosure, but rather these embodiments are intended only to provide a brief summary of certain disclosed embodiments. Indeed, the present disclosure may encompass a variety of forms that may be similar to or different from the embodiments set forth below.

As used herein, the term "coupled" or "coupled to" may indicate establishing either a direct or indirect connection (e.g., where the connection may not include or include intermediate or intervening components between those coupled), and is not limited to either unless expressly referenced as such. The term "set" may refer to one or more items. Wherever possible, like or identical reference numerals are used in the figures to identify common or the same elements. The figures are not necessarily to scale and certain features and certain views of the figures may be shown exaggerated in scale for purposes of clarification.

As used herein, the terms "inner" and "outer"; "up" and "down"; "upper" and "lower"; "upward" and "downward"; "above" and "below"; "inward" and "outward"; and other like terms as used herein refer to relative positions to one another and are not intended to denote a particular direction or spatial orientation. The terms "couple," "coupled," "connect," "connection," "connected," "in connection with," and "connecting" refer to "in direct connection with" or "in connection with via one or more intermediate elements or members.

Furthermore, when introducing elements of various embodiments of the present disclosure, the articles "a," "an," and "the" are intended to mean that there are one or more of the elements. The terms "comprising," "including," and "having" are intended to be inclusive and mean that there may be additional elements other than the listed elements. Additionally, it should be understood that references to "one embodiment," "an embodiment," or "some embodiments" of the present disclosure are not intended to be interpreted as excluding the existence of additional embodiments that also incorporate the recited features. Furthermore, the phrase A "based on" B is intended to mean that A is at least partially based on B. Moreover, unless expressly stated otherwise, the term "or" is intended to be inclusive (e.g., logical OR) and not exclusive (e.g., logical XOR). In other words, the phrase A "or" B is intended to mean A, B, or both A and B.

As used herein, the term "processing system" refers to an electronic computing device such as, but not limited to, a single computer, virtual machine, virtual container, host, server, laptop, and/or mobile device, or to a plurality of electronic computing devices working together to perform the function described as being performed on or by the computing system. As used herein, the term "medium" refers to one or more non-transitory, computer-readable physical media that together store the contents described as being stored thereon. Embodiments may include non-volatile secondary storage, read-only memory (ROM), and/or random-access memory (RAM).

In addition, as used herein, the terms "real time", "real-time", or "substantially real time" may be used interchangeably and are intended to describe operations (e.g., computing operations) that are performed without any human-perceivable interruption between operations. For example, as used herein, data relating to the systems described herein may be collected, transmitted, and/or used in control computations in "substantially real time" such that data readings, data transfers, and/or data processing steps occur once every second, once every 0.1 second, once every 0.01 second, or even more frequent, during operations of the systems (e.g., while the systems are operating). In addition, as used herein, the terms "continuous", "continuously", or "continually" are intended to describe operations that are performed without any significant interruption. For example, as used herein, control commands may be transmitted to certain equipment every five minutes, every minute, every 30 seconds, every 15 seconds, every 10 seconds, every 5 seconds, or even more often, such that operating parameters of the equipment may be adjusted without any significant interruption to the closed-loop control of the equipment. In addition, as used herein, the terms "automatic", "automated", "autonomous", and so forth, are intended to describe operations that are performed are caused to be performed, for example, by a computing system (i.e., solely by the computing system, without human intervention). Indeed, although certain operations described herein may not be explicitly described as being performed continuously and/or automatically in substantially real time during operation of the computing system and/or equipment controlled by the computing system, it will be appreciated that these operations may, in fact, be performed continuously and/or automatically in substantially real time during operation of the computing system and/or equipment controlled by the computing system to improve the functionality of the computing system (e.g., by not requiring human intervention, thereby facilitating faster operational decision-making, as well as improving the accuracy of the operational decision-making by, for example, eliminating the potential for human error), as described in greater detail herein.

The present disclosure is generally directed towards detecting perfluoroalkyl and polyfluoroalkyl substances (PFAS) using surface-enhanced Raman spectroscopy (SERS) on modified laser-induced graphene (LIG). In the following discussion, the PFAS may include perfluorooctanoic acid, perfluorooctanesulfonic acid, perfluorobutanesulfonic acid. hexafluoropropylene oxide dimer acid, perfluorononanoic acid, perfluorohexanesulfonic acid, perfluorodecanoic acid, perfluorooxanoic acid, and/or any other undesirable compounds or any per/poly-fluoroalkyl compounds sought to be removed from fluids. In certain embodiments, a PFAS detection system includes a LIG subsystem, an electrochemistry (Echem) subsystem, a SERS subsystem, a control system, or a combination thereof. The PFAS detection system may facilitate fabrication of a PFAS detection platform to detect one or more PFAS compounds in one or more liquids. The PFAS detection platform may include one or more LIG based electrodes modified with nanoparticles to provide a sensing surfaces for detection of PFAS in liquids. The PFAS detection platform may be in combination with the SERS subsystem to detect a presence of the one or more PFAS compounds in the one or more liquids. As discussed below, the control system may be used to control fabrication of the PFAS detection platform. Additionally and/or alternatively, the control system may be used to control the SERS subsystem to detect PFAS compounds in liquids.

In operation, the PFAS detection system may be used to fabricate PFAS detection platforms (e.g., LIG-based SERS substrates) that may be used to enhance Raman scattering of PFAS compounds present in samples (e.g., liquid samples for PFAS detection). The PFAS detection platforms may be formed by generating one or more LIG electrodes. The LIG electrodes may be formed on a variety of substrates such as substrates treated with one or more polymers (e.g., polyimide, polydimethylsiloxane, poly(etherimide), poly(ether-etherketone), etc.). By ablating the substrate with a laser, the LIG subsystem may form the LIG electrodes in a variety of geometries based on desired sensing configurations. For example, the LIG electrodes may be formed in a particular geometry to form a PFAS detection platform that may be compatible with a portable SERS analyzer. That is, a sensing area of the PFAS detection platform may be formed to enable optical measurements (e.g., SERS measurements) of the PFAS detection platform. In this manner, nanofeatures may be formed on the sensing area of the PFAS detection platform to enhance Raman signals indicative of presence of PFAS compounds.

In some embodiments, the Echem subsystem may be used in combination with the SERS subsystem to detect PFAS compounds in liquids on or near the sensing area on the PFAS detection platform. For example, applying a potential to the PFAS detection platform may further enhance SERS signals of the PFAS compounds. Without wishing to be bound by theory, it is believed that altering electrochemical potentials of the LIG electrodes may modify the Fermi level of the LIG electrodes which may increase a probability of charge transfer between the LIG electrodes and one or more adsorbed PFAS compound. As charge transfer impacts SERS signal, such change in electrochemical potentials may further improve PFAS detection at the sensing area of the PFAS detection platform.

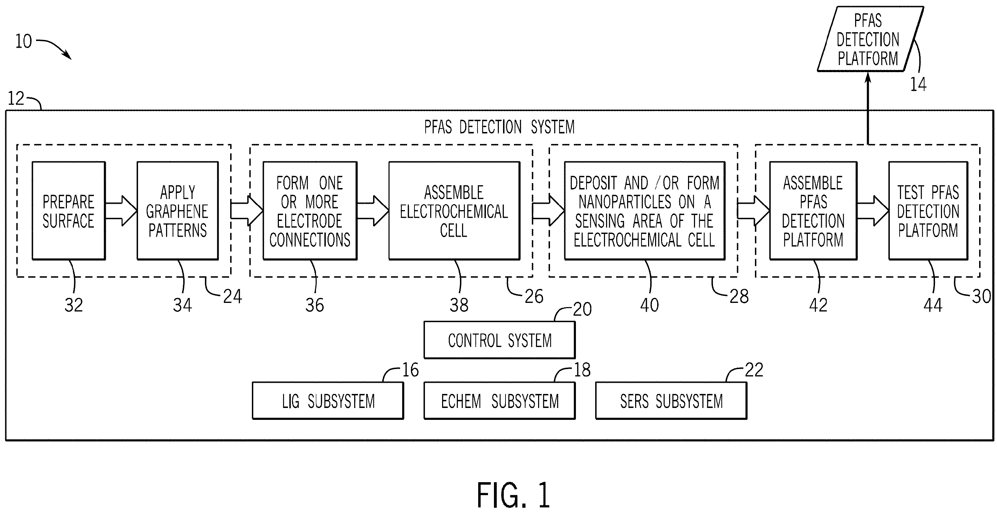

With the foregoing in mind, FIG. 1 is a schematic illustrating a process 10 that may be performed by a PFAS detection system 12 to form a PFAS detection platform 14, in accordance with an embodiment of the present disclosure. The process 10 generally produces the PFAS detection platform 14 for use in detecting one or more PFAS compounds. The PFAS detection platform 14 may be formed via a LIG subsystem 16, an electrochemistry subsystem 18 (e.g., Echem subsystem), a control system 20, or a combination thereof. The PFAS detection platform 14 may be configured to detect the PFAS compounds using a SERS subsystem 22. In some embodiments, the PFAS detection platform 14 may be fabricated to include a sensing area with one or more nanostructures to provide enhancement of Raman signals of the PFAS compounds. The PFAS detection platform 14 streamlines detection and analysis of PFAS contaminants (e.g., undesired PFAS) in fluids. As shown, the process 10 may include one or more stages. The one or more stages may be controlled via the control system 20 of the PFAS detection system 12 or any other suitable controller. It should be noted, that the illustrated stages are provided as examples and more, fewer, or different stages may be included in the process 10. As shown, the process 10 may include a LIG stage 24, an electrochemical cell formation stage 26, a surface modification stage 28, and an output stage 30.

In some embodiments, the LIG stage 24 includes modifying one or more substrates to form one or more LIG patterns. For example, the LIG stage 24 may include a block 32 directed towards surface preparation and a block 34 directed towards LIG formation. The substrates may include carbonaceous based substrates such as plastic substrates (e.g., thermoplastics), tapes (e.g., polymer-based tape), ceramics, and the like. In some instances, LIG patterns may be formed directly on a surface of carbonaceous based substrate. Additionally and/or alternatively, LIG patterns may be formed on a treated surface (e.g., coating, polymer treated, and the like) of substrates. As such, at the block 32 of the LIG stage 24, a surface of the one or more substrates may be prepared. The surface of a substrate may be prepared by coating the surface of the substrate, cleaning the surface of the substrate, or a combination thereof. Surface preparation may be used to form a carbon surface to enable LIG modification of the carbon surface to promote formation of graphene on the surface of the substrate. It should be noted, a wide variety of carbon surfaces may be used for LIG modification, such as graphite, crystalline carbon (e.g., diamond), amorphous carbon, fullerenes, graphene, and other types of carbon-based materials.

In certain embodiments, the surface of the substrates may be prepared by adding a polymer film on the surface of the substrate, functionalizing the surface of the substrate with a polymer resin, and the like. The polymer film and/or polymer resin may include polymers such as polyimide, polydimethylsiloxane, poly(etherimide), poly(ether-ether-ketone) (PEEK), and the like. In some embodiments, the surface of the substrate may be prepared by performing one or more cleaning to remove unwanted contaminants. For example, the surface of the substrates may be treated using ozone cleaning, plasma cleaning, and the like.

In some embodiments, the LIG stage 24 proceeds to the block 34. The PFAS detection system may apply one or more graphene patterns to the surface (e.g., prepared surface) of the substrate at the block 34. Application of the graphene patterns may be performed using the LIG subsystem 16. The LIG subsystem 16 may include a laser configured to write (e.g., modify) the surfaces of the substrate. The LIG subsystem 16 may form graphene by exposing the surfaces of the substrate to a laser. Laser exposure of the surfaces of the substrate may convert sp³-hybrized carbon atoms to sp²-hybridized carbon atoms. In this manner, photochemical and thermal conversion of atoms at the surface of the substrate may be converted into graphene to form an inhomogeneous porous structure. Modifying the penetration depth of the laser of the LIG subsystem 16 may provide tuning of the amount of graphene that is formed. As such, parameters of the laser such as energy, power, emission type (e.g., pulsed, continuous), or a combination thereof may impact the amount of graphene formed by the LIG subsystem 16.

In certain embodiments, the one or more patterns generated by the LIG subsystem 16 may be customizable. The patterns may be based on one or templates (e.g., CAD files, SVG files, etc.) generated to enable compatibility of the PFAS detection platform 14 with one or more measurement modalities (e.g., optical measurement techniques, electrochemical measurement techniques, and the like). For example, a sensing area may be formed by the LIG subsystem 16 generating a LIG sensing area of customizable dimensions. The sensing area may be formed in a shape configured to be used as a working electrode in an electrochemical cell. Additionally and/or alternatively, a counter electrode and/or a reference electrode may be included in the patterns generated by the LIG subsystem 16. The patterns generated by the LIG subsystem 16 may form graphene on various length scales. That is, features generated by the LIG subsystem 16 (e.g., areas of LIG) may be on length scales such as the macroscale (e.g., 1 mm to 100 cm), the microscale (e.g., 1 µm to 1 mm), the nanoscale (e.g., 10 nm to 1 µm), or a combination thereof. In some embodiments, the LIG subsystem 16 may form graphene in patterns on the microscale and/or the nanoscale enabling fabrication of PFAS detection platforms for compact sensing applications (e.g., miniaturized PFAS detection platforms).

In some embodiments, the LIG stage 24 is advanced to the electrochemical cell formation stage 26 based on formation of a LIG substrate. The electrochemical cell formation stage 26 may include a block 36 directed towards forming electrode connections and a block 38 directed towards assembly of an electrochemical cell. The electrochemical cell may include, a two-electrode set-up, a three-electrode set-up, or a four-electrode set-up. In the block 36 of the electrochemical cell formation stage 26, one or more connections may between one or more electrodes of the LIG substrate. The one or more electrodes may include one or more LIG electrodes generated by LIG subsystem 16 during the LIG stage 24. Additionally and/or alternatively one or more additional electrodes may be used in combination with the LIG electrodes. For example, the additional electrodes may include a standard reference electrode (e.g., silver/silver chloride (Ag/AgCl) electrode, glassy carbon electrode, standard hydrogen electrode (SHE), calomel electrode, etc.), a standard counter electrode (e.g., platinum electrode, silver electrode, gold electrode, carbon fiber, conductive polymers, and the like), and the like. The connections between the electrodes may be formed to enable electrical connectivity between the electrodes to enable electrochemical methods (e.g., cyclic voltammetry, chronoamperometry, impedance spectroscopy, and the like) to be applied to the electrochemical cell. For example, the connections between the electrodes may be formed using silver paint, conductive adhesives, wired connections, physical contact, or a combination thereof.

In some embodiments, the electrochemical cell formation stage 26 proceeds to the block 38. The electrochemical cell may be assembled at the block 38. Assembly of the electrochemical cell may include addition of an electrolyte solution, connecting one or more electrode leads, measuring cell potential of the electrochemical cell, or a combination thereof. The electrolyte solution may include KNO₃, HNO₃, H₂SO₄, NaNO₃, NaOH, Na₂SO₄, NaCl, and the like as supporting electrolytes. It should be noted, the electrolyte solution may be selected based on a type of nanoparticle surface modification technique used in the surface modification stage 28 of the process 10. Additionally and/or alternatively, the electrolyte solution may be selected based on compatibility with PFAS (e.g., surface interactions, adsorption). In this manner, parameters such as pH, ionic strength, and/or electrolyte composition may be considered during selection of the electrolyte solution.

In some embodiments, the electrochemical cell formation stage 26 proceeds to the surface modification stage 28 of the process 10 based on formation of the electrochemical cell. The surface modification stage 28 may include, at block 40, modifying one or more sensing areas the electrochemical cell by depositing and/or forming nanoparticles (e.g., metal nanoparticles). Nanoparticles may be used to form hot spots (e.g., regions of electromagnetic enhancement due to plasmon resonance generation) at the surface of the sensing areas of electrochemical cell. Hot spots may enhance Raman scattering cross section of PFAS compounds improving detection of PFAS compounds during SERS analysis.

In certain embodiments, the sensing area may be modified with nanoparticles (e.g., nanostructures) via electrodeposition of nanoparticles. The sensing area may correspond to at least a portion of the working electrode of the electrochemical cell. Electrodeposition is an electrochemical method that may be used to deposit nanoparticles on the sensing surface using an electric current to reduce dissolved metal ions onto the surface of the working electrode to form nanostructures. The nanostructures may include nanoparticles of various sizes, shapes, and morphologies. That is, parameters (e.g., current density, applied potential, duration of electrodeposition, etc.) during electrodeposition may be used to control resulting nanostructure formation within the sensing area. Such parameters (e.g., sizes, shapes, and morphologies) of deposited nanostructures may impact SERS performance as properties of nanoparticles strongly depend on corresponding structure of such nanostructures. Electrodeposition may be used to generate nanostructures of various materials such as gold, silver, aluminum, and copper. It should be noted, in some embodiments, the sensing area may be modified with nanoparticles (e.g., nanostructures) via nanoparticle decoration. That is, the sensing area may be modified using electrochemical free techniques such as electroless deposition, surface de-wetting, physical vapor deposition, chemical vapor deposition, lithography and the like.

In some embodiments, the surface modification stage 28 is advanced to the output stage 30 of the process 10 based on surface modification of the electrochemical cell with nanostructures. The output stage 30 may include a block 42 directed towards assembly the PFAS detection platform 14 and a block 44 directed towards testing the PFAS detection platform 14. At the block 42 of the output stage 30, the PFAS detection platform 14 may be assembled. The PFAS detection platform 14 may be positioned within an electrochemical setup, a SERS analyzer, or a combination thereof. For example, the PFAS detection platform 14 may be connected to a potentiostat of the Echem subsystem 18 to control potential and/or voltage differences between electrodes of the PFAS detection platform. Additionally and/or alternatively, the PFAS detection platform 14 may be positioned with the SERS analyzer of the SERS subsystem 22 to enable optical detection of Raman scattering occurring at the sensing area of the PFAS detection platform 14.

At the block 44 of the output stage 30 the PFAS detection platform 14 may be tested to ensure electrochemical connectivity, optical alignment, confirmation of one or more additional device parameters, or a combination thereof. For example, the PFAS detection platform may be positioned with the SERS analyzer of the SERS subsystem 22 and connected to the potentiostat of the Echem subsystem 18 via one or more electrical leads. The chemical potential of the PFAS detection platform 14 may be tested to confirm connectivity of the electrodes. Optical alignment of the SERS subsystem 22 may be tested and/or calibrated by collecting a baseline measurement without PFAS, measuring one or more standard samples, or a combination thereof. The output stage 30 may provide the PFAS detection platform 14 for use in PFAS detection. PFAS detection may be based on electrochemical detection techniques, SERS detection techniques, or a combination thereof.

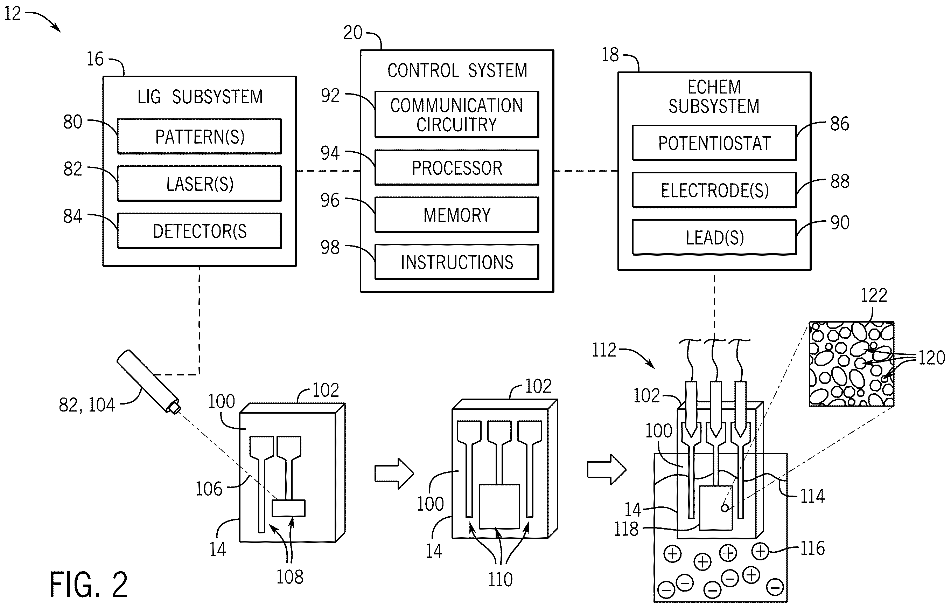

FIG. 2 is a schematic diagram of the PFAS detection system 12 of FIG. 1 including the PFAS detection platform 14, a LIG subsystem 16, an Echem subsystem 18, and a control system 20, in accordance with an embodiment of the present disclosure. The LIG subsystem 16 may include one or more patterns 80 (e.g., masks), one or more lasers 82, one or more detectors 84, and/or one or more additional components. The Echem subsystem 18 may include a potentiostat 86, one or more electrodes 88, one or more leads 90, and/or one or more additional components. The control system 20 may include communication circuitry 92, a processor 94, memory 96, instructions 98, and/or one or more additional components (e.g., controllers, sensors, etc.). The control system 20 may be used to control the LIG subsystem 16 and/or the Echem subsystem 18 to form one or more modified LIG surfaces of the PFAS detection platform 14.

In some embodiments, the control system 20 may be communicatively coupled to the LIG subsystem 16, the Echem subsystem 18, and/or one or more additional components of the PFAS detection system 12. The control system 20 may be configured to communicate with sensors and various equipment of the PFAS detection system 12. For example, the control system 20 may be configured to receive sensor feedback from one or more sensors coupled the LIG subsystem 16, the Echem subsystem 18, and/or additional components of the PFAS detection system 12 and control equipment based on sensor feedback data, operating modes, user inputs, operational procedures, or any combination thereof. The control system 20 may communicate with the components directly and/or through the network in accordance with present embodiments. In certain embodiments, a selected pattern of the patterns 80 of the LIG subsystem 16 may be automatically communicated to the lasers 82 for LIG formation in real-time, thereby enabling real-time writing (e.g., laser ablation) to form LIG areas of the PFAS detection platform 14. The patterns 80 may be stored in a memory of the LIG subsystem and/or the memory 96 of the control system 20..

The communication circuitry 92 may be a wireless or wired communication component (e.g., circuitry) that may facilitate communication between the control system 20, various types of devices, components of the PFAS detection system 12, the LIG subsystem 16, the Echem subsystem 18, the network, and the like. Additionally, the communication circuitry 92 may facilitate data transfer to the control system 20, such that the control system 20 may receive data from the other components discussed with respect to FIG. 1 and the like. The communication circuitry 92 may use a variety of communication protocols, such as Open Database Connectivity (ODBC), TCP/IP Protocol, Distributed Relational Database Architecture (DRDA) protocol, Database Change Protocol (DCP), HTTP protocol, other suitable current or future protocols, or combinations thereof.

The processor 94 may include single-threaded processor(s), multi-threaded processor(s), or both. The processor 94 may process instructions stored in the memory 96. The processor 94 may also include hardware-based processor(s) each including one or more cores. The processor 94 may include general purpose processor(s), special purpose processor(s), or both. The processor 94 may be communicatively coupled to other internal components (such as the communication circuitry 92, the data storage, the I/O ports, and the display). The memory 96 and the data storage may be any suitable articles of manufacture that can serve as media to store processor-executable code, data, or the like. These articles of manufacture may represent computer-readable media (e.g., any suitable form of memory or storage) that may store the processor-executable code used by the processor 94 to perform the presently disclosed techniques. As used herein, applications may include any suitable computer software or program that may be installed onto the control system 20 and executed by the processor 94. The memory 96 and the data storage may represent non-transitory computer-readable media (e.g., any suitable form of memory or storage) that may store the processor-executable code used by the processor 94 to perform various techniques described herein. It should be noted that non-transitory merely indicates that the media is tangible and not a signal. It should be noted that the components described above with regard to the PFAS detection system are exemplary components and the PFAS detection system may include additional or fewer components as shown.

As shown, the LIG subsystem 16 may be used to form LIG on a surface 100 of a substrate 102 to generate the PFAS detection platform 14. A particular laser 82, 104 of the LIG subsystem 16 may irradiate via electromagnetic radiation 106 of one or more portions 108 of the surface 100 of the substrate 102. The particular laser 82, 104 may include a CO₂ laser, a UV laser, an IR laser, a semiconductor laser, and the like. The particular laser 82 may be pulsed or continuous. The energy radiation 106 may include radiation at various wavelengths. For example the wavelength of the energy radiation 106 may range from 150 nm to 400 nm, 450 nm to 759 nm, 750 nm to 1800 nm, 9 µm to 11 µm, and the like. Irradiation of the portions 108 of the surface may be based on execution of a particular pattern 80 to form LIG in areas corresponding to the portions 108 of the surface 100. For example, as shown the one or more portions 108 may form one or more LIG electrodes 110. Additionally and/or alternatively, the one or more portions 108 may correspond to one or more areas in which LIG is formed to generate one or more graphene areas (e.g., carbonous areas) on the surface 100 of the substrate 102.

In some embodiments, an electrochemical cell 112 may be assembled including the PFAS detection platform 14. The electrochemical cell 112 may include an electrolyte solution 114, a metal ion solution 116 (e.g., metal salt), and/or one or more additional solutions. The electrochemical cell 112 may be connected to the potentiostat 86 via the one or more leads 90. The electrolyte solution 114 may include KNO₃, HNO₃, H₂SO₄, NaNO₃, NaOH, Na₂SO₄, NaClO, NaCl, and the like. The metal ion solution 116 may include ions of one or more metals including gold, silver, aluminum, copper, or a combination thereof.

In certain embodiments, the control system 20 may control the Echem subsystem 18 to apply a potential to the electrochemical cell 112 to electrodeposit nanoparticles on one or more portions of the surface 100 of the substrate 102. For example, a sensing area 118 may be modified through electrodeposition. After electrodeposition, the sensing area 118 may include nanoparticles 120. As shown, a portion of the sensing area 122 may include nanoparticles 120 may be of various shapes and sizes. In some embodiments, the control system 20 may control nanoparticle shape and size through modification of one or more electrochemical parameters (e.g., potential step, current density, etc.). Additionally and/or alternatively, a concentration of the metal ion solution 116 may be varied to impact shape and size of the nanoparticles 120. The nanoparticles 120 may be analyzed using electron microscopy, optical spectroscopy, and/or one or more additional techniques. The PFAS detection platform 14 may include LIG graphene areas modified with nanoparticles. The sensing area 118 may be used to detect PFAS compounds with improved sensitivity as compared to previously available technologies.

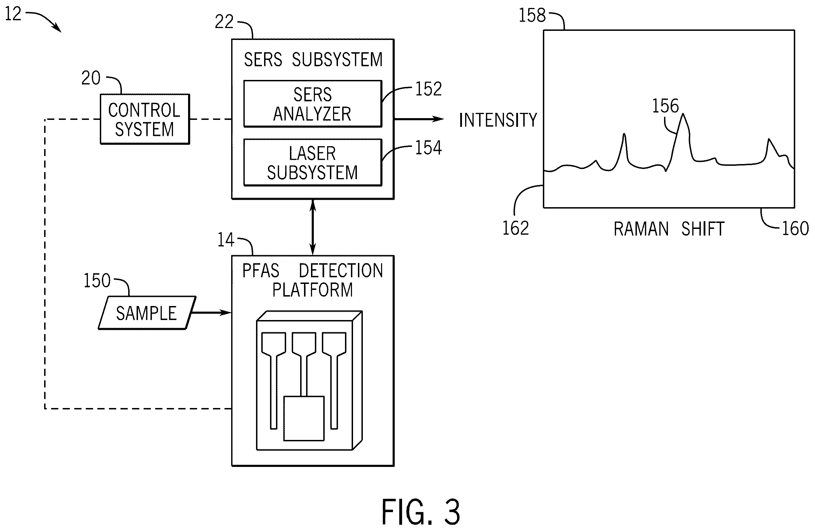

FIG. 3 is a schematic illustrating detection of PFAS compounds via the PFAS detection platform 14 using surface enhanced Raman spectroscopy (SERS), in accordance with aspects of the present disclosure. The control system 20 may control the SERS subsystem 22 to detect a presence of PFAS compounds in a sample 150. The sample 150 may include one or more PFAS compounds such as perfluorooctanoic acid, perfluorooctanesulfonic acid, perfluorobutanesulfonic acid. hexafluoropropylene oxide dimer acid, perfluorononanoic acid, perfluorohexanesulfonic acid, perfluorodecanoic acid, perfluorooxanoic acid, and/or any other undesirable compounds. The sample 150 may be sourced from industrial sites, landfills, wastewater treatment plants, water sources, and the like. The SERS subsystem 22 may include a SERS analyzer 152 (e.g., sample chamber, mobile sample chamber, and the like). The SERS subsystem 22 may include a laser subsystem 154. The laser subsystem 154 may include one or more suitable emission sources to stimulate molecular vibrations, phonons or other excitations in the sample 150. Excitation of the sample 150 may provide a spectral signature 156 (e.g., spectra) of one or more compounds present in the sample 150. That is, the spectral signature 156 may provide information related to vibrational modes of compounds in the sample 150. In this manner, in embodiments, in which the sample 150 include one or more PFAS compounds, the spectral signature 156 may be used to detect the PFAS compounds. As shown, a SERS graph 158 may be provided by the SERS subsystem 22. The SERS graph 158 may include an x-axis 160 and a y-axis 162. The x-axis 160 may include the Raman shift and the y-axis 162 may include the intensity of the spectral signature 156. The SERS graph 158 may be analyzed and the spectral signature 156 may be used to determine presence of PFAS compounds in the sample 150.

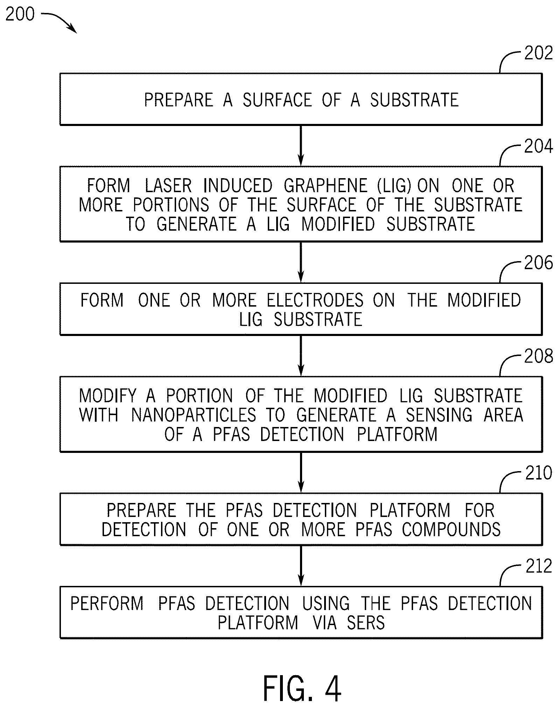

FIG. 4 is a flow diagram of an embodiment of a process 200 for preparing a PFAS detection platform and detecting PFAS on the PFAS detection platform via SERS, in accordance with aspects of the present disclosure. The process 200 may be performed by a computing device or controller disclosed above with reference to FIG. 2 and/or FIG. 3 or any other suitable computing device(s) or controller(s). Furthermore, the blocks of the process 200 may be performed in the order disclosed herein or in any suitable order. For example, certain blocks of the process 200 may be performed concurrently. In addition, in certain embodiments, at least one of the blocks of the process 200 may be omitted. The process 200 may include any or all of the features discussed in detail above with reference to FIGS. 1-3.

At block 202 of the process 200, the PFAS detection system 12 may prepare a surface of a substrate. The surface of the substrate may be prepared by modifying the surface with a carbonous material to enable LIG generation. For example, the carbonous material may include polymeric materials such as polyimide, natural materials, and/or one or more materials including carbon precursors. In some embodiments, the surface of the substrate may be prepared by cleaning the surface using ozone treatment, plasma treatment, one or more surface treatments, or a combination thereof.

At block 204 of the process 200, the PFAS detection system 12 may form laser induced graphene (LIG) on the one or more portions of the surface of the substrate to generate a LIG modified substrate. LIG may be formed by irradiating the surface (e.g., treated surface) of the substrate with a laser. The carbonous material may be modified to generate graphene on the portions of the surface of the substrate. The LIG may be formed in one or more patterns. The patterns may be generated by selectively irradiating the portions of the surface of the substrate. Selective irradiation by the laser may form graphene (e.g., sp³-hybrized carbon) at the surface of the substrate. The LIG may include porous graphene material that may be conductive. As such, the LIG may be used as an electrode, portions of the electrodes, and the like.

At block 206 of the process 200, the PFAS detection system 12 may form one or more electrodes (e.g., the LIG electrodes 110) on the modified LIG substrate. One or more portions of the LIG substrate may serve as the one or more electrodes. For example, the LIG substrate may be patterned as a working electrode to server as a conductive area on the surface of the substrate. One or more additional electrodes may be formed to generate an electrochemical cell. For example, one or more counter electrodes and/or one or more reference electrodes may be formed. In some embodiments, the counter electrodes may include LIG. Alternatively, the counter electrodes may include platinum, conductive polymers, and the like. The reference electrodes may include an Ag/AgCl electrode, a glassy carbon electrode, a SHE, a calomel electrode, and the like. It should be noted, that one or more electrode connections may be formed between the LIG substrate, the one or more electrodes, the one or more additional electrodes, or a combination thereof. The electrode connections may be formed of any suitable conductive material (e.g., patterned LIG, silver paint, conductive polymers, conductive tape, etc.).

At block 208 of the process 200, the PFAS detection system 12 may modify a portion of the modified LIG substrate with nanoparticles to generate a sensing area of a PFAS detection platform. Modification of the portion of the LIG substrate with nanoparticles may be performed using electrodeposition. For example, an electrochemical cell (e.g., the electrochemical cell 112) including the LIG substrate may be used to electrodeposit nanoparticles on the portion (e.g., a sensing area). The nanoparticles may include particles of various morphologies, shapes, and sizes. In some embodiments, the nanoparticles may be formed to generate plasmon resonances that overlap with an excitation wavelength of a SERS subsystem. Such overlap may provide further enhancement of vibrations in molecules at the sensing area.

At block 210 of the process 200, the PFAS detection system may prepare the PFAS detection platform for detection of one or more PFAS compounds. The PFAS detection platform may be designed to be compatible with one or more SERS analyzers (e.g., detection instruments). For example, the PFAS detection platform may include an optically transparent window to enable Raman measurements to be conducted at the sensing area of the PFAS detection platform. In some embodiments, the PFAS detection platform may be included in a detection electrochemical cell to enable application of electrochemical potentials to the PFAS detection platform during optical measurements. In this manner, the Fermi level of the PFAS detection platform may be used to may increase a probability of charge transfer between the PFAS detection platform and one or more adsorbed PFAS compounds in a sample.

At block 212 of the process 200, the PFAS detection system 12 may perform PFAS detection using the PFAS detection platform via SERS. PFAS detection via SERS may provide sensitive and specific detection of one or more PFAS compounds in one or more samples (e.g., liquids). The PFAS compounds may be detected based on one or more spectral signatures corresponding to Raman active modes of the PFAS compounds. The nanoparticles on the sensing area of the PFAS detection platform may enhance the Raman active modes and improve detection of the spectral signatures. It should be noted, in some embodiments, PFAS detection may be monitored via electrochemical detection. For example, electrochemical potential may be applied to the PFAS detection platform to impact charge transfer impacting the Raman active modes of the PFAS compounds. It should be noted, in some embodiments, the PFAS detection platform may directly detect the PFAS compounds. Additionally and/or alternatively, the PFAS detection platform may include detect the PFAS compounds via one or more SERS tags (e.g., Raman reporters).

Technical effects of the disclosed embodiments include a PFAS detection system 12 including a PFAS detection platform 14 for detection of PFAS compounds via SERS. The PFAS detection system 12 may include a control system, a LIG subsystem, an electrochemical subsystem, a SERS subsystem, or a combination thereof. The PFAS detection system may be used to detect PFAS compounds at a sensing area of a modified LIG surface of the PFAS detection platform 14. Advantageously, by modifying the sensing area of the PFAS detection platform 14 with nanoparticles via electrodeposition, the PFAS detection platform 14 may offer improved detection of PFAS compounds. For example, the PFAS detection platform 14 may offer a sensing platform to streamline detection of PFAS compound with fewer sample preparation steps as compared to conventional techniques. In this manner, the PFAS detection system may improve PFAS detection by streamlining fabrication of detectors using LIG modification. A control system 20 of the PFAS detection system 12 may control fabrication of the PFAS detection platform 14 and detection of one or more PFAS compounds via SERS and/or electrochemical techniques. The disclosed techniques may provide a sensing surfaces for detection of PFAS in liquids. As such, deployment of the presently disclosed techniques may provide improved efficiency and/or sensitivity in detecting PFAS compounds in various samples.

The subject matter described in detail above may be defined by one or more clauses, as set forth below.

A method is provided that includes preparing a surface of a substrate, wherein the surface of the substrate includes a carbonous material, controlling, via a control system, a LIG subsystem to generate a LIG modified area of the substrate, modifying, via an electrochemical subsystem, the LIG modified area of the substrate to generate a sensing area comprising one or more nanoparticles, and performing, via a SERS subsystem, detection of a spectral signature of one or more PFAS compounds on the sensing area.

The method of the preceding clause, including receiving one or more patterns; and selectively irradiating one or more portions of the surface of the substrate based on the patterns, wherein the patterns correspond to a shape of the LIG modified area of the substrate.

The method of any of the preceding clauses, including assembling an electrochemical cell including the LIG modified area of the substrate, an electrolyte solution, and a metal ion solution and applying an electrochemical potential to the electrochemical cell, wherein the potential is configured to form the one or more nanoparticles on the sensing area via electrodeposition.

The method of any of the preceding clauses, controlling a shape, a size, a morphology, or a combination thereof of the nanoparticles based on the electrochemical potential, a concentration of the metal ion solution, or a combination thereof.

The method of any of the preceding clauses, wherein the carbonous material is polyimide, polydimethylsiloxane, poly(etherimide), or poly(ether-ether-ketone).

The method of any of the preceding clauses, wherein the one or more nanoparticles are gold, silver, copper, aluminum, or a combination thereof.

A perfluoroalkyl and polyfluoroalkyl substances (PFAS) detection system is provided that includes a PFAS detection platform comprising a sensing area, wherein the sensing surface includes a modified laser-induced graphene (LIG) surface comprising one or more nanoparticles and a surface enhanced Raman (SERS) subsystem including a SERS analyzer configured to detect a spectral signature of one or more PFAS compounds in a sample based on light interacting with the one or more PFAS compounds on a surface of the sensing area of the PFAS detection platform.

The PFAS detection system of the preceding clause, including a LIG subsystem configured to form the modified LIG surface, wherein the LIG subsystem forms one or more areas of LIG on one or more portions of a substrate of the PFAS detection platform.

The PFAS detection system of any of the preceding clauses, including one or more lasers and one or more detectors.

The PFAS detection system of any of the preceding clauses, wherein the LIG subsystem is configured to: determine a pattern to print onto the sensing surface and selectively control laser irradiation of the PFAS detection platform based on the pattern.

The PFAS detection system of any of the preceding clauses, including an electrochemical subsystem configured to generate the one or more nanoparticles via electrodeposition.

The PFAS detection system of any of the preceding clauses, including a potentiostat, one or more electrodes, and one or more leads.

The PFAS detection system of any of the preceding clauses, wherein the electrochemical subsystem is configured to modify one or more electrochemical parameters associated with operation of the electrochemical subsystem, wherein the modification of the one or more electrochemical parameters controls a shape, a size, a morphology, or a combination thereof of the one or more nanoparticles generated via the electrodeposition.

The PFAS detection system of any of the preceding clauses, wherein the PFAS detection platform includes one or more electrodes configured to apply an electrochemical potential to the sensing area.

The PFAS detection system of any of the preceding clauses, wherein the electrochemical potential is configured to enhance the spectral signature of the one or more PFAS compounds.

The PFAS detection system of any of the preceding clauses, wherein the one or more nanoparticles comprise gold, silver, copper, aluminum, or a combination thereof.

A PFAS detection system is provided that includes a PFAS detection platform including a sensing area, wherein the sensing area comprises one or more areas of LIG and a plurality of nanoparticles, processing circuitry including one or more processors and memory storing instructions, that when executed by the processing circuitry, cause the processing circuitry to detect, via the PFAS detection platform, a spectral signature of one or more PFAS compounds, wherein detection of the spectral signature of the one or more PFAS compounds comprises excitation, via a SERS subsystem, of the sensing area of the PFAS detection platform to excite one or more vibrational modes of the PFAS compounds and wherein excitation of the one or more vibrational modes of the PFAS compounds is enhanced based on the one or more LIG areas and the nanoparticles of the sensing area of the PFAS detection platform.

The PFAS detection system of the preceding clause, wherein the PFAS detection platform is formed by selectively irradiating one or more portions of a surface of a substrate to generate the one or more areas of LIG.

The PFAS detection system of any of the preceding clauses, wherein the plurality of nanoparticles is formed via electrodeposition.

The PFAS detection system of any of the preceding clauses, wherein enhancement of the one or more vibrational modes of the PFAS compounds is based on formation of one or more hot spots between the plurality of nanoparticles.

The foregoing description, for purpose of explanation, has been described with reference to specific embodiments. However, the illustrative discussions above are not intended to be exhaustive or to limit the disclosure to the precise forms disclosed. Many modifications and variations are possible in view of the above teachings. Moreover, the order in which the elements of the methods described herein are illustrated and described may be re-arranged, and/or two or more elements may occur simultaneously. The embodiments were chosen and described in order to best explain the principals of the disclosure and its practical applications, to thereby enable others skilled in the art to best utilize the disclosure and various embodiments with various modifications as are suited to the particular use contemplated.

Finally, the techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for [perform]ing [a function]..." or "step for [perform]ing [a function]...", it is intended that such elements are to be interpreted under 35 U.S.C. 112(f). However, for any claims containing elements designated in any other manner, it is intended that such elements are not to be interpreted under 35 U.S.C. 112(f).

## Claims

1. A method comprising:
preparing a surface of a substrate, wherein the surface of the substrate comprises a carbonous material;
controlling, via a control system, a LIG subsystem to generate a LIG modified area of the substrate;
modifying, via an electrochemical subsystem, the LIG modified area of the substrate to generate a sensing area comprising one or more types of nanoparticles; and
performing, via a SERS subsystem, detection of a spectral signature of one or more PFAS compounds on the sensing area.

2. The method of claim 1, further comprising:
receiving one or more patterns; and
selectively irradiating one or more portions of the surface of the substrate based on the patterns, wherein the patterns correspond to a shape of the LIG modified area of the substrate.

3. The method of claim 1 or 2, further comprising:
assembling an electrochemical cell comprising the LIG modified area of the substrate, an electrolyte solution, and a metal ion solution; and
applying an electrochemical potential to the electrochemical cell, wherein the potential is configured to form the one or more types of nanoparticles on the sensing area via electrodeposition, preferably comprising:
controlling a shape, a size, a morphology, or a combination thereof of the nanoparticles based on the electrochemical potential, a concentration of the metal ion solution, or a combination thereof.

4. The method of any one of the preceding claims, wherein the carbonous material is polyimide, polydimethylsiloxane, poly(etherimide), or poly(ether-ether-ketone).

5. The method of any one of the preceding claims, wherein the one or more types of nanoparticles comprise gold, silver, copper, aluminum, or a combination thereof.

6. A perfluoroalkyl and polyfluoroalkyl substances (PFAS) detection system, comprising:
a PFAS detection platform comprising a sensing area, wherein the sensing surface comprises a modified laser-induced graphene (LIG) surface comprising one or more types of nanoparticles; and
a surface enhanced Raman (SERS) subsystem comprising a SERS analyzer configured to detect a spectral signature of one or more PFAS compounds in a sample based on light interacting with the one or more PFAS compounds on a surface of the sensing area of the PFAS detection platform.

7. The PFAS detection system of claim 6, further comprising a LIG subsystem configured to form the modified LIG surface, wherein the LIG subsystem forms one or more areas of LIG on one or more portions of a substrate of the PFAS detection platform.

8. The PFAS detection system of claim 7, wherein the LIG subsystem comprises:
one or more lasers; and
one or more detectors,
wherein the LIG subsystem is preferably configured to:
determine a pattern to print onto the sensing surface; and
selectively control laser irradiation of the PFAS detection platform based on the pattern.

9. The PFAS detection system of claim 6, 7 or 8, further comprising an electrochemical subsystem configured to generate the one or more types of nanoparticles via electrodeposition.

10. The PFAS detection system of claim 9, wherein the electrochemical subsystem comprises:
a potentiostat;
one or more electrodes; and
one or more leads; and/or
wherein the electrochemical subsystem is configured to modify one or more electrochemical parameters associated with operation of the electrochemical subsystem, wherein the modification of the one or more electrochemical parameters controls a shape, a size, a morphology, or a combination thereof of the one or more nanoparticles generated via the electrodeposition.

11. The PFAS detection system of any one of the claims 6 - 10, wherein the PFAS detection platform comprises one or more electrodes configured to apply an electrochemical potential to the sensing area,
wherein the electrochemical potential is preferably configured to enhance the spectral signature of the one or more PFAS compounds.

12. The PFAS detection system of any one of the claims 6 - 11, wherein the one or more types of nanoparticles comprise gold, silver, copper, aluminum, or a combination thereof.

13. A PFAS detection system, comprising:
a PFAS detection platform comprising a sensing area, wherein the sensing area comprises one or more areas of LIG and a plurality of nanoparticles, wherein the plurality of nanoparticles is preferably formed via electrodeposition;
processing circuitry comprising one or more processors; and
memory storing instructions, that when executed by the processing circuitry, cause the processing circuitry to
detect, via the PFAS detection platform, a spectral signature of one or more PFAS compounds
wherein detection of the spectral signature of the one or more PFAS compounds comprises excitation, via a SERS subsystem, of the sensing area of the PFAS detection platform to excite one or more vibrational modes of the PFAS compounds; and
wherein excitation of the one or more vibrational modes of the PFAS compounds is enhanced based on the one or more LIG areas and the nanoparticles of the sensing area of the PFAS detection platform.

14. The PFAS detection system of claim 13, wherein the PFAS detection platform is formed by selectively irradiating one or more portions of a surface of a substrate to generate the one or more areas of LIG.

15. The PFAS detection system of claim 13 or 14, wherein enhancement of the one or more vibrational modes of the PFAS compounds is based on formation of one or more hot spots between the plurality of nanoparticles.
